# EUROPÄISCHE PATENTSCHRIFT

(11) **EP 3 345 279 B1**
(45) Veröffentlichungstag und Bekanntmachung des Hinweises auf die Patenterteilung: **07.08.2019**
(21) Anmeldenummer: 16760480.0
(22) Anmeldetag: 02.09.2016
(51) Int. Cl.: H02J 3/38, F03D 7/02, H02J 3/32, H02J 3/48

(54) **VERFAHREN ZUM EINSPEISEN ELEKTRISCHER LEISTUNG**
METHOD FOR SUPPLYING ELECTRICAL POWER
PROCÉDÉ D'INJECTION DE PUISSANCE ÉLECTRIQUE

(30) Priorität: 03.09.2015 DE 102015114704
(43) Veröffentlichungstag der Anmeldung: 11.07.2018
(73) Patentinhaber: Wobben Properties GmbH, 26607 Aurich (DE)
(72) Erfinder: BEEKMANN, Alfred, 26639 Wiesmoor (DE)
(74) Vertreter: Eisenführ Speiser
(86) Internationale Anmeldenummer: PCT/EP2016/070741
(87) Internationale Veröffentlichungsnummer: WO 2017/037245

(56) Entgegenhaltungen:
- EP-A2- 1 672 779
- EP-A2- 2 096 299
- US-A1- 2010 145 533

## Beschreibung

Die vorliegende Erfindung betrifft ein Verfahren zum Einspeisen elektrischer Leistung in ein elektrisches Versorgungsnetz durch wenigstens eine Windenergieanlage. Weiterhin betrifft die vorliegende Erfindung eine Windenergieanlage zum Einspeisen elektrischer Leistung in ein elektrisches Versorgungsnetz. Außerdem betrifft die vorliegende Erfindung einen Windpark mit mehreren Windenergieanlagen zum Einspeisen in ein elektrisches Versorgungsnetz.

Windenergieanlagen sind allgemein bekannt und sie speisen elektrische Leistung in nur ein elektrisches Versorgungsnetz. Das beinhaltet auch ein elektrisches Verteilungsnetz. Über das bloße Einspeisen elektrischer Leistung hinaus ist es inzwischen auch üblich geworden und wird teilweise von Netzbetreibern gefordert, dass Windenergieanlagen auch einen Beitrag zur Netzstützung liefern.

Beispielsweise ist es aus dem US-Patent (6,891,281) bekannt, von der Windenergieanlage eingespeiste Leistung in Abhängigkeit der Netzfrequenz, also der im Netz aktuell vorhandenen und gemessenen Frequenz, gegebenenfalls anzupassen, insbesondere zu reduzieren.

Besonders diese Maßnahme ist eine Reaktion der Windenergieanlage auf Veränderungen im Netz und die Reaktion auf Frequenzänderungen ist zudem eine Steuerung bzw. Regelung in der Annahme, dass Großkraftwerke, die wenigstens einen direkt mit dem Netz gekoppelten Synchrongenerator verwenden, das Netz dominieren. Besonders der Zusammenhang zwischen Netzfrequenz und Leistungsbilanz im Netz, der auch dem oben genannten Dokument zugrunde liegt, geht von dieser Dominanz von Großkraftwerken aus.

Insoweit die Dominanz solcher Großkraftwerke aber in Zukunft abnehmen wird oder zumindest abnehmen kann, oder in speziellen Regionen abnimmt, können andere Zusammenhänge wirken. Besonders ergeben sich neue Probleme, wenn eine Grundstabilität durch ein herkömmliches wie oben beschriebenes Kraftwerk nicht mehr vorhanden ist oder man sich darauf zumindest nicht verlassen möchte.

Eine besondere Herausforderung kann es dann sein, ein stabiles Netz dauerhaft bereitzustellen, wenn solche Großkraftwerke nicht oder wenig vorhanden sind. Besonders das Bereitstellen, Schaffen oder Betreiben eines solchen stabilen Netzes durch dezentrale Energieerzeuger, wie Windenergieanlagen, kann ein Problem oder zumindest eine Herausforderung sein. Ein Problem hierbei kann sein, dass neben physikalisch anderem Verhalten als dies von Großkraftwerken bekannt ist, auch wesentlich mehr Einheiten involviert sind und die Stabilität oder eben gegebenenfalls auch eine Instabilität schaffen, hervorrufen oder zumindest beeinflussen können.

Das Deutsche Patent- und Markenamt hat in der Prioritätsanmeldung zu vorliegender Anmeldung folgenden Stand der Technik recherchiert: DE 10 2013 207 264 A1; US 6,891,281 B2, US 8,981,755 B2; Esmaili, A; Nasiri, A.: Power smoothing and power ramp control for wind energy using energy stoarge. In 2011 IEEE Energy Conversion Congress and Exposition (ECCE), Phoenix, 17.-22.09.2011 und TenneT TSO GmbH: Netzanschlussregeln Hoch- und Höchstspannung. Stand 1. Dezember 2012.

Das Dokument EP 1 672 779 A2 beschreibt ein System und ein Verfahren zum Steuern einer Leistungsrampenrate eines Windparks. Das Dokument US 2010/145533 A1 beschreibt ein Verfahren und System zur Steuerung der Leistungsrampenrate für erneuerbare variable Energieerzeugungssysteme. Das Dokument EP 2 096 299 A2 beschreibt eine Erweiterung einer sogenannten "Automatic generation control (AGC)" für die Integration von Windenergieanlagen.

Der vorliegenden Erfindung liegt somit die Aufgabe zugrunde, zumindest eines der oben genannten Probleme zu adressieren. Insbesondere soll eine Lösung zur Stabilisierung eines elektrischen Versorgungsnetzes geschaffen werden. Zumindest soll gegenüber bekannten Lösungen eine alternative Lösung vorgeschlagen werden.

Erfindungsgemäß wird ein Verfahren gemäß Anspruch 1 vorgeschlagen. Die Erfindung betrifft somit ein Verfahren zum Einspeisen elektrischer Leistung in ein elektrisches Versorgungsnetz durch wenigstens eine Windenergieanlage. Das Einspeisen wird dabei so gesteuert, dass Änderungen der eingespeisten Leistung begrenzt werden. Änderungen der eingespeisten Leistung, die sich beispielsweise aus der Änderung der Windgeschwindigkeit ergeben können, sollen somit nicht in jedem Fall unmittelbar an das Netz weitergegebenen werden, sondern begrenzt werden. Als Begrenzung wird wenigstens ein Grenzgradient vorgegeben, der den Betrag der maximalen Änderung festlegt. Die vorgeschlagene Begrenzung betrifft somit die Geschwindigkeit der Änderung der Leistung. Steigt also die aus dem Wind verfügbare Leistung plötzlich an oder fällt sie plötzlich ab, soll aber nicht die eingespeiste Leistung ebenso plötzlich ansteigen oder abfallen, sondern sich maximal mit dem vorgegebenen Grenzgradient ändern. Anschaulich gesprochen wird eine Flankensteilheit für die Änderung der Leistung vorgegeben.

Für den Grenzgradienten wird nun vorgeschlagen, dass er von einer Eigenschaft des Versorgungsnetzes abhängt, oder dass er von einem momentanen Zustand des Versorgungsnetzes abhängt. Er kann auch von beidem zugleich abhängen.

Dem liegt besonders der Gedanke zugrunde, dass die Auswirkungen auf das Netz von Leistungsänderungen der eingespeisten Leistung davon abhängen können, welche Eigenschaften das Netz hat, insbesondere wie stark es ist. Außerdem oder alternativ kann dieser Einfluss der Leistungsänderung auf das Netz von dem momentanen Zustand des Versorgungsnetzes abhängen, also beispielsweise davon, ob das Netz gerade eine ausgewogene Leistungsbilanz hat oder gerade mit einer Frequenz genau bei der Nennfrequenz betrieben wird oder ob die Frequenz von dieser Nennfrequenz gerade mehr oder weniger stark abweicht.

Der Grenzgradient wird somit in Abhängigkeit einer Eigenschaft und/oder in Abhängigkeit eines momentanen Zustandes des Versorgungsnetzes eingestellt. Mit anderen Worten wird die bereits anschaulich genannte Flankensteilheit für die maximale Änderung der eingespeisten Leistung an das Netz und/oder seinen momentanen Zustand angepasst.

Der Grenzgradient kann bspw. eine prozentuale Änderung pro Zeit angeben. Der prozentuale Wert kann sich auf eine Nennleistung der betreffenden Windenergieanlage oder die Nennleistung des betreffenden Windparks beziehen, um nur zwei Beispiele zu nennen. Als Bezugsgröße kommt auch die Netzanschlussleistung des betreffenden Netzeinspeisepunktes in Betracht, um ein weiteres Beispiel zu nennen.

Vorzugsweise kann für eine Erhöhung der eingespeisten Leistung ein anderer Grenzgradient als für eine Verringerung der eingespeisten Leistung vorgesehen sein. In diesem Fall wird nicht nur ein Grenzgradient vorgegeben, sondern es werden zwei Grenzgradienten vorgegeben. Die Grenzgradienten können auf unterschiedliche Art und Weise vorgegeben werden oder einfach mit unterschiedlichen Werten vorgegebenen werden.

Vorzugsweise wird der wenigstens eine Grenzgradient in Abhängigkeit einer Netzsensitivität des Versorgungsnetzes eingestellt. Auf diese Art und Weise könne auch beide Grenzgradienten vorgegeben werden, wobei die Zusammenhänge quantitativ unterschiedlich sein können, aber auch gleich sein können.

Jedenfalls wird unter der Netzsensitivität ein Verhältnis einer Netzspannungsänderung zu einer Änderung der eingespeisten Wirkleistung definiert. Dies ist auf einen Netzeinspeisepunkt bezogen. Beide Änderungen können einheitenlos sein, indem beispielsweise jeweils eine prozentuale Änderung zugrunde gelegt wird. Es wird also betrachtet, welchen Einfluss die Änderung der eingespeisten Wirkleistung auf eine Änderung der Netzspannung hat. Je stärker die Änderung der Netzspannung auf eine gleiche Änderung der eingespeisten Wirkleistung ist, umso größer ist die Netzsensitivität. Das Netz ist dann auch sensitiver oder empfindlicher auf Leistungsänderungen.

Eine solche Netzsensitivität wird zugrunde gelegt, wobei die Erfassung der Netzsensitivität allerdings nicht so durchgeführt werden muss, dass bewusst eine prozentuale Leistungsänderung vorgegeben und die Reaktion des Netzes beobachtet wird. Die Netzsensitivität kann beispielsweise online durch gleichzeitige Beobachtung von Änderungen der eingespeisten Leistung und Änderungen der Netzspannung erfasst werden.

Eine solche Netzsensitivität ist als eine Netzeigenschaft anzusehen. Das schließt aber nicht aus, dass sich diese Eigenschaft des Netzes auch ändern kann. Die Netzsensitivität kann von dem physikalischen Ausbau des betroffenen Netzes abhängen, hängt insbesondere aber auch von der Größe des Netzes und den angeschlossenen Verbrauchern und Erzeugern ab. Wird beispielsweise ein großer Verbraucher, wie eine Industrieanlage vom Netz getrennt, resultiert regelmäßig eine höhere Netzsensitivität.

Vorzugsweise wird der Grenzgradient, nämlich dem Betrage nach, je kleiner eingestellt, je größer die Netzsensitivität ist. Ist die Netzsensitivität also groß und das Netz somit empfindlich, wird ein kleiner Grenzgradient und somit eine flache, also wenig steile Flanke für die Leistungsänderungen als Grenze vorgesehen. Die eingespeiste Leistung kann sich dann also nur noch sehr langsam ändern. Ist die Netzsensitivität hingegen gering, kann eine Leistungsänderung auch kräftiger, nämlich schneller vorgenommen werden und das wird dadurch zugelassen, dass der wenigstens eine Grenzgradient höher eingestellt wird.

Gemäß einer Ausführungsform wird vorgeschlagen, dass für die Begrenzung eines Anstiegs der eingespeisten Leistung ein erster Grenzgradient und für die Begrenzung eines Abfalls, also einer Verringerung der eingespeisten Leistung, ein zweiter Grenzgradient vorgegeben wird, die unterschiedlich sind. Hierdurch können unterschiedliche Zusammenhänge für die Wirkung einer Leistungserhöhung auf das Netz einerseits und einer Leistungsverringerung auf das Netz andererseits berücksichtigt werden. Vorzugsweise wird der erste Grenzgradient größer als der zweite Grenzgradient ausgewählt. Das kann auch bedeuten, dass Einstellvorschriften verwendet werden, die sich zwischen erstem und zweitem Grenzgradienten so unterscheiden, insbesondere quantitativ so unterscheiden, dass unterschiedlich große Grenzgradienten herauskommen.

Das Vorgeben eines größeren Grenzgradienten für das Ansteigen der Leistung geht davon aus, dass eine Leistungserhöhung weniger kritisch für die Netzstabilität ist, als eine Leistungsverringerung.

Gemäß einer Ausführungsform wird vorgeschlagen, dass zur Begrenzung eines Abfalls der eingespeisten Leistung elektrische Leistung aus einem elektrischen Zwischenspeicher verwendet wird. Zunächst ist zu beachten, dass eine Windenergieanlage häufig so viel Leistung einspeist, wie sie gemäß den aktuellen Windverhältnissen dem Wind entnehmen kann. Fällt der Wind nun ab, ist grundsätzlich auch weniger einzuspeisende Leistung vorhanden. Eine Begrenzung des Leistungsabfalls könnte dann bedeuten, dass mehr Leistung, zumindest kurzfristig, eingespeist werden soll, als tatsächlich vorhanden ist. Um in dieser Situation gleichwohl einen solchen Grenzgradienten, also die Beschränkung des Leistungsabfalls auf einem bestimmten Gradienten durchführen zu können, wird zusätzliche Leistung benötigt. Hierzu wird ein Zwischenspeicher vorgeschlagen. Eine Möglichkeit, besonders für einen kurzfristigen Vorgang, ist, den Gleichspannungszwischenkreis zu verwenden, wenn die Windenergieanlage nach dem Vollumrichterkonzept arbeitet. Ein solcher Gleichspannungszwischenkreis kann aber nur für einen sehr kurzen Zeitraum elektrische Leistung bereitstellen. Zum einen ist wenig Leistung in ihm gespeichert und zum anderen führt das Entnehmen elektrischer Leistung aus dem Gleichspannungszwischenkreis zu einem Spannungsabfall der Zwischenkreisspannung, der das Einspeisen ungünstig beeinflussen kann.

Außerdem oder alternativ kann kinetische Energie der Windenergieanlage, besonders aus dem rotierenden aerodynamischen Rotor und/oder dem rotierenden Läufer des Generators verwendet werden. Auch hier wäre zu beachten, dass solche kinetische Energie nur für einen kurzen Zeitraum ausreicht, um die Verringerung der Leistung zu verlangsamen. Je nach Situation kann die gespeicherte kinetische Energie aber ausreichen. Weiterhin ist zu beachten, dass die Gefahr bestehen kann, dass die Verringerung der Drehzahl hierbei zu einem ungünstigen Betriebszustand führen kann. Im Extremfall kann sogar der Weiterbetrieb der Anlage gefährdet sein, was zu einem zusätzlichen Problem führen würde.

Vorzugsweise wird ein zusätzlicher, insbesondere externer Zwischenspeicher, insbesondere elektrischer Zwischenspeicher vorgesehen. Der kann beispielsweise als Batteriebank ausgebildet sein, die für eine solche Leistungspufferung vorgesehen ist und auch zu dem Zweck dimensioniert werden kann.

Gemäß einer Ausgestaltung wird vorgeschlagen, dass die Windenergieanlage dazu vorbereitet ist, elektrische Leistung aus dem Versorgungsnetz aufzunehmen. Diese elektrische Leistung kann beispielsweise in einen elektrischen Zwischenspeicher eingespeichert werden, besonders in den zuvor beschriebenen. Außerdem oder alternativ kann eine solche aus dem Netz entnommene Leistung auch über entsprechende Widerstandsbänke verbraucht werden, also in Wärme umgewandelt und abgegeben werden.

Für diese aus dem Versorgungsnetz aufzunehmende elektrische Leistung wird nun vorgeschlagen, dass auch ihre Änderung über wenigstens einen oder den wenigstens einen Grenzgradienten begrenzt wird. Auch hier wird somit vorgeschlagen, dass diese entnommene elektrische Leistung sich auch nur entlang einer entsprechenden Änderungsflanke erhöht oder verringert. Besonders dann, wenn ein solcher Entnahmevorgang gestartet wird, soll die zu entnehmende Leistung langsam hochgefahren werden. Auch wenn diese Leistungsentnahme beendet wird, soll die entnommene Leistung wieder langsam zurückgefahren, also zurückgesenkt, werden. Dies kann durch die Grenzgradienten begrenzt bzw. auch konkret vorgegeben werden. Hier können dieselben Grenzgradienten verwendet werden, wie für das Ändern der abgegebenen Leistung. Es können aber auch andere Grenzgradienten bestimmt werden und diese anderen Grenzgradienten können auch solchen Anforderungen genügen bzw. prinzipiell so eingestellt werden, wie dies vorstehend in einigen Ausführungsformen zur Einstellung der Grenzgradienten für die eingespeiste Leistung beschrieben wurde.

Gemäß einer Ausführungsform wird vorgeschlagen, dass der wenigstens eine Grenzgradient außerdem in Abhängigkeit eines Kurzschlussstromverhältnisses eingestellt wird. Über das Kurzschlussstromverhältnis, das bezogen auf den Netzanschlusspunkt definiert ist, kann eine zusätzliche Information über eine Eigenschaft des elektrischen Versorgungsnetzes berücksichtigt werden. Ist das Kurzschlussstromverhältnis groß, und liegt beispielsweise bei dem Wert 10, liegt ein vergleichsweise starkes Netz vor, jedenfalls bezogen auf diesen Netzanschlusspunkt, so dass eine stärkere und schnellere Leistungsschwankung vertragen wird.

Außerdem oder alternativ wird vorgeschlagen, dass der wenigstens eine Grenzgradient auch abhängig des absoluten Wertes der Netzspannung eingestellt wird. Hierdurch kann beispielsweise berücksichtigt werden, dass eine bereits niedrige Spannung eine stärkere Begrenzung der Leistungsänderung erforderlich machen kann. Vorzugsweise wird hier vorgeschlagen, dass bei niedrigen Spannungen, insbesondere Spannungen, die unter einer Nennspannung liegen, der positive Grenzgradient betragsmäßig größer gewählt wird als der negative Grenzgradient. Bei einer entsprechend hohen Spannung kann umgekehrt vorgegangen werden, also ein betragsmäßig kleinerer positiver Grenzgradient als ein negativer Grenzgradient gewählt werden.

Gemäß einer weiteren Ausgestaltung wird außerdem oder alternativ vorgeschlagen, die Grenzgradienten oder den wenigstens einen Grenzgradienten abhängig einer Netzfrequenz zu verändern, nämlich in Abhängigkeit einer erfassten Ist-Frequenz im elektrischen Versorgungsnetz. Auch die Netzfrequenz kann einen Hinweis über den Netzzustand geben. Besonders bei einer sehr hohen Netzfrequenz kann von einem Leistungsüberangebot im Netz ausgegangen werden und entsprechend können die Grenzgradienten oder der wenigstens eine Grenzgradient eingestellt werden.

Beispielsweise kann bei einem solchen angenommenen Leistungsüberangebot im Netz vorgesehen sein, den positiven Grenzgradienten betragsmäßig kleiner auszuwählen als den negativen Grenzgradienten, um nur ein Beispiel einer Anwendung zu nennen.

Gemäß einer weiteren Ausgestaltung wird vorgeschlagen, dass der Grenzgradient in Abhängigkeit einer Eigenschaft und/oder eines momentanen Zustandes des Versorgungsnetzes angepasst wird.

Der Grenzgradient wird somit dynamisch an das Versorgungsnetz angepasst. Es wird demnach nicht ein einzelner starrer Grenzgradient eingestellt, sondern ein Grenzgradient der an die vorherrschenden Eigenschaften des Versorgungsnetzes angepasst ist. Der Grenzgradient selbst wird dabei in Abhängigkeit der entsprechenden Eigenschaft bzw. des entsprechenden momentanen Zustandes des Versorgungsnetzes eingestellt.

Gemäß einer weiteren Ausgestaltung wird vorgeschlagen, dass der Grenzgradient in Abhängigkeit einer Eigenschaft und/oder eines momentanen Zustandes des Versorgungsnetzes verändert wird.

Der Grenzgradient wird somit im laufenden Betrieb der Anlage dynamisch verändert und an die Eigenschaften und/oder den momentanen Zustand des Versorgungsnetzes angepasst. Beispielsweise weist das Versorgungsnetz einen ersten, normalen Betriebszustand auf und die Anlage wird mit einem ersten, diesem Zustand entsprechenden Gradienten betrieben. Kommt es nun zu einem veränderten Zustand des Versorgungsnetzes, beispielsweise durch eine Störung, wird der Grenzgradient entsprechend verändert und die Anlagen mit diesem veränderten, dem zweiten Grenzgradienten betrieben.

Erfindungsgemäß wird zudem eine Windenergieanlage vorgeschlagen, die elektrische Leistung in ein elektrisches Versorgungsnetz einspeist und ein Verfahren gemäß wenigstens einer der vorstehend beschriebenen Ausführungsformen einsetzt.

Erfindungsgemäß wird auch ein Windpark vorgeschlagen, der mehrere Windenergieanlagen aufweist. Der Windpark kann durch ein Verfahren gemäß wenigstens einer der vorstehend beschriebenen Ausführungsformen in das elektrische Versorgungsnetz einspeisen. Außerdem oder alternativ kann er eine, mehrere oder alle seine Windenergieanlagen gemäß einer Windenergieanlage verwenden, die mit einem Verfahren gesteuert wird, wie vorstehend zu wenigstens einer Ausführungsform beschrieben wurde.

Insoweit kann der Windpark einerseits insgesamt so einspeisen, wie vorstehend erläutert wurde, nämlich insbesondere seine Leistung durch einen Grenzgradienten in ihrer Änderung begrenzen, oder jede Windenergieanlage in dem Windpark für sich nimmt ein solches Verfahren vor und begrenzt für sich die eingespeiste Leistung. Wenn alle Windenergieanlagen im Park gleich arbeiten und denselben Grenzgradienten einstellen bzw. auf dieselbe Art und Weise einstellen, kann das Ergebnis dasselbe sein. Wenn aber besonders ein Mischpark vorhanden ist, kann es eventuell sinnvoll sein, diese Leistungsänderungsbegrenzung zentral durch den Windpark vorzugeben.

Die Erfindung wird nun nachfolgend anhand von Ausführungsformen unter Bezugnahme auf die begleitenden Figuren näher erläutert.
- Fig. 1: zeigt eine Windenergieanlage in einer perspektivischen Darstellung.
- Fig. 2: zeigt einen Windpark schematischen in einem Strukturbild.
- Fig. 3: zeigt schematisch eine Struktur einer Ausführungsform der Erfindung zur Veranschaulichung.

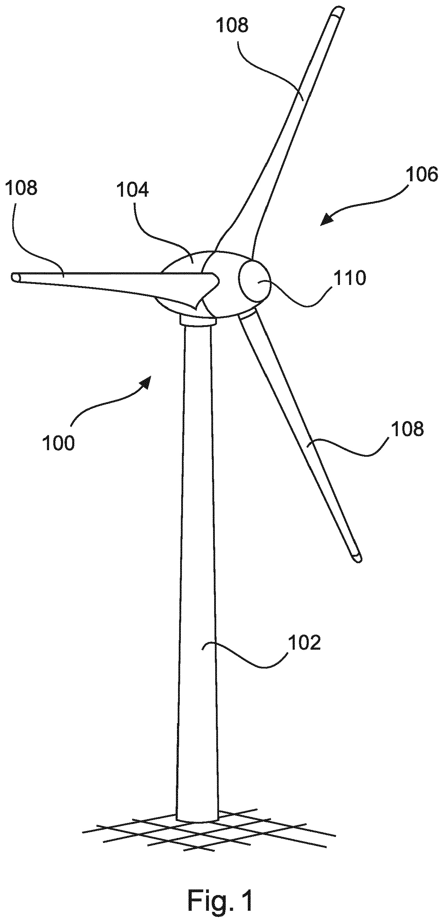

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

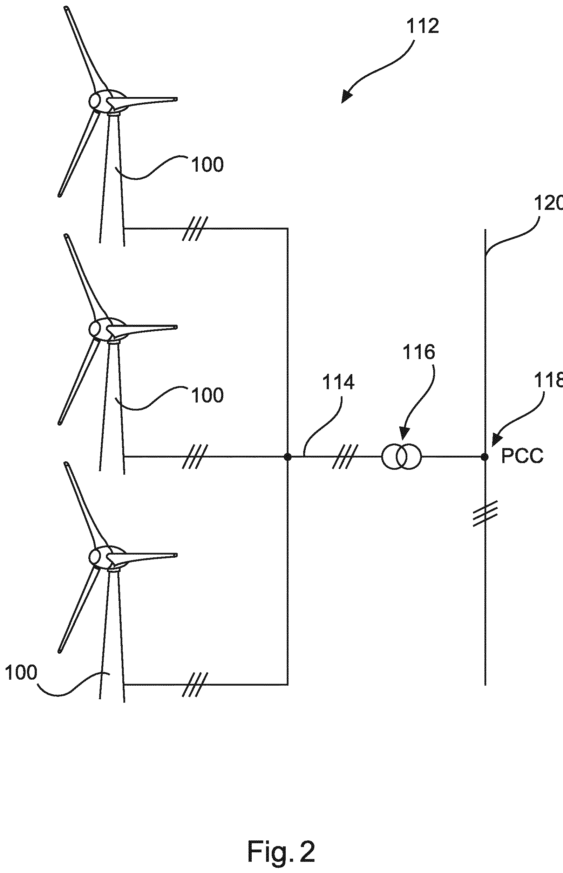

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

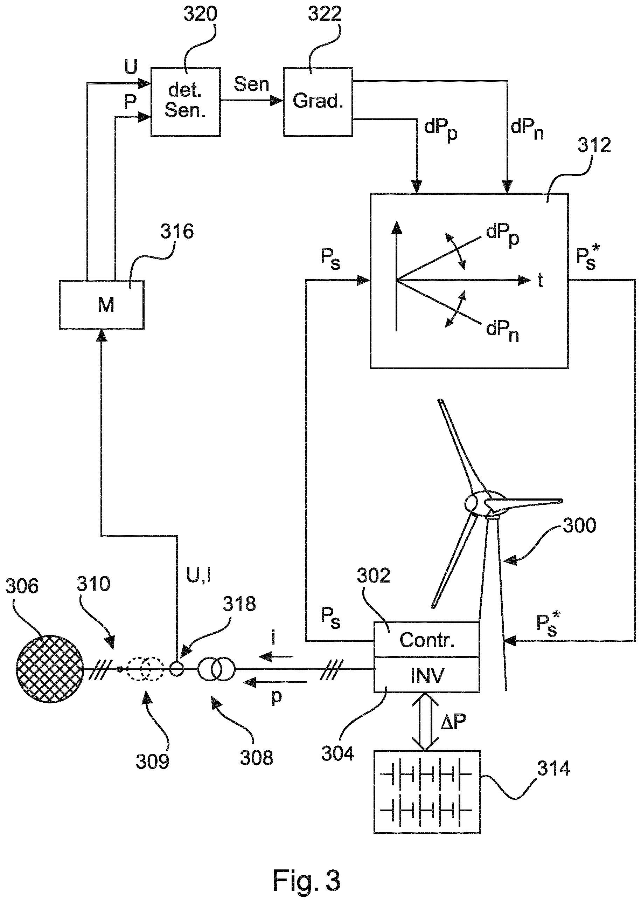

Figur 3 zeigt schematisch eine Struktur einer Ausführungsform der Erfindung zur Veranschaulichung. Darin ist eine Windenergieanlage 300 schematisch eingezeichnet, die wenigstens eine Steuereinheit 302 sowie einen Wechselrichter 304 aufweist. Die Steuereinheit 302 steuert unter anderem die Einspeisung elektrischer Leistung P, die mittels des Wechselrichters 304 vorgenommen wird. Insoweit steuert die Steuereinheit 302 den Wechselrichter 304. Die Steuereinheit 302 kann aber diverse weitere Funktionen haben und insbesondere weitere Elemente der Windenergieanlage 300 steuern.

Der Wechselrichter 304 speist somit Leistung P in ein elektrisches Versorgungsnetz 306 über einen Transformator 308 ein. Der Ausgang des Transformators 308 kann als Netzanschlusspunkt 310 angesehen werden. Die Verwendung eines Transformators 308 ist üblich, aber nicht zwingend notwendig.

In einem stationären oder quasi stationären Betriebspunkt erzeugt die Windenergieanlage 300 bei ausreichend Wind elektrische Leistung P und speist diese in das elektrische Versorgungsnetz 306 ein. Tatsächlich erzeugt der Wechselrichter 304 dafür einen elektrischen Strom i, der mit der entsprechenden Spannung eingespeist wird und üblicherweise dreiphasig ist. Es können nun verschiedene Gründe eintreten, dass sich diese eingespeiste Leistung P ändert oder ändern soll. Eine Möglichkeit ist, dass beispielsweise der Wind ansteigt, so dass mehr Leistung eingespeist werden kann, wenn zuvor nicht bereits maximale Leistung eingespeist wurde. Es kommen aber auch andere Möglichkeiten in Betracht, wie beispielsweise eine Leistungsreduzierung zur Schallreduzierung oder eine Leistungsänderung aufgrund einer Anforderung des Netzbetreibers. Entsprechend kommt auch in Betracht, die Leistung zu erhöhen, wenn ein Betrieb mit schallbedingt reduzierter Leistung beendet wird.

In jedem Fall steuert die Steuereinheit 302 die Leistung P, die der Wechselrichter einspeist bzw. einspeisen soll.

Die Steuereinheit 302 kann dafür einen Leistungssollwert Pₛ erzeugen. Der Wechselrichter 304 könnte einen solchen Leistungssollwert Pₛ umsetzen.

Es wird nunmehr vorgeschlagen, dass sich die eingespeiste Leistung P nicht beliebig schnell ändern soll. Zumindest soll diese Änderung überwacht und dann gegebenenfalls gesteuert werden. Somit wird zunächst die Sollleistung Pₛ einem Begrenzungsblock 312 zugeführt. Dieser Begrenzungsblock 312 gibt einen Grenzgradienten dPₚ für einen Leistungsanstieg vor und er gibt einen negativen Grenzgradienten dPₙ für einen betragsmäßig maximalen Leistungsabfall, also eine maximale negative Steigung für einen Leistungsabfall vor. Der Leistungssollwert Pₛ wird somit in diesen Begrenzungsblock 312 eingegeben und unverändert als modifizierter Leistungssollwert Pₛ^{*} wieder ausgegeben, wenn die Änderung dieses Leistungssollwertes innerhalb der vorgegebenen Grenzgradienten liegt, wenn der Leistungssollwert Pₛ also nicht zu schnell ansteigt und auch nicht zu schnell abfällt.

Wenn der Leistungssollwert Pₛ^{*} jedoch zu schnell ansteigt, nämlich so, dass der Grenzgradient dPₚ überschritten werden würde oder der negative Grenzgradient dPₙ unterschritten werden würde, so erfolgt dann eine Anpassung dieses Leistungssollwertes so, dass die Grenzen nicht über- bzw. unterschritten werden. In diesem Fall unterscheidet sich der modifizierte Leistungssollwert Pₛ^{*} von dem Leistungssollwert Pₛ, der in den Begrenzungsblock 312 eingegeben wird.

In jedem Fall wird der modifizierte Leistungssollwert Pₛ^{*} der Steuereinheit 302 zugeführt und der Wechselrichter 304 wird dann so gesteuert, dass die eingespeiste Leistung P dem modifizierten Leistungssollwert Pₛ^{*} entspricht.

In manchen Situationen kann ein tatsächlich modifizierter Sollwert Pₛ^{*} einer Leistungsvorgabe entsprechen, die nicht der in dem Moment im Wind verfügbaren Leistung entspricht.

Dieser modifizierte Sollwert Pₛ^{*} kann zumindest zeitweise größer oder kleiner als die verfügbare Leistung sein. Es entsteht dadurch eine Leistungsdifferenz zwischen verfügbarer Leistung und einzuspeisender Leistung Pₛ^{*}. Diese Differenzleistung ist in Figur 3 als ΔP angegeben und kann sowohl positiv als auch negativ sein. Gemäß der Ausführungsform der Figur 3 wird vorgeschlagen, solche Differenzleistung ΔP in einem Energiespeicher 314 einzuspeichern bzw. daraus zu entnehmen. Diese vorgeschlagene Begrenzung der Leistungsänderung kann zunächst für den Betreiber der Windenergieanlage 300 unerwünscht sein. Dies wird hier aber in Kauf genommen, um eine Stabilisierung des elektrischen Versorgungsnetzes 306 vorrangig zu gewährleisten. Im Übrigen ist der Energiespeicher 314 als Batteriespeicher veranschaulicht, kann aber auch anders ausgestaltet sein, beispielsweise als Schwungradspeicher, als Wasserstoffspeicher oder als eine Kombination unterschiedlicher Speicherarten, um ein weiteres Beispiel zu nennen.

Es wurde nun aber erkannt, dass mitunter nicht immer dieselben Grenzgradienten eine optimale oder auch einfach notwendige Netzstützung sind. Es wird somit vorgeschlagen, dass die Grenzgradienten dPₚ und dPₙ abhängig von Netzeigenschaften und/oder Netzzuständen verändert werden. Eine bevorzugte Ausführungsform ist, diese Änderung abhängig von einer Netzsensitivität vorzunehmen. Dies ist in Figur 3 veranschaulicht. Es können aber, was dort nicht dargestellt ist, andere oder ergänzende Netzeigenschaften bzw. Netzzustände berücksichtigt werden.

Es werden an einer Messstelle 318 wenigstens Strom I und Spannung U gemessen und im Messblock 316 ausgewertet. Der Messblock 316 bestimmt daraus die eingespeiste Leistung P und überträgt dies, zusammen mit der Spannung U, an den Sensitivitätsblock 320. Alternativ könnte hier auch der modifizierte Leistungssollwert Pₛ^{*} verwendet werden, denn er gibt die Leistung an, die eingespeist werden soll. Zur tatsächlichen Erfassung der Netzsensitivität wird hier aber vorgeschlagen, die tatsächlich eingespeiste Leistung zu erfassen und somit die Messung der Messstelle 318 und Auswertung des Messblocks 316 zu verwenden.

Der Strom I und die Spannung U werden an dem Netzanschlusspunkt 310 erfasst. Die Erfassung kann auch windenergieanlagenseitig des Transformators 308 vorgenommen werden. Eine mögliche Alternative ist, dass ein zusätzlicher Transformator 309 vorhanden ist, um die Spannung nach dem Transformator 308 zum elektrischen Versorgungsnetz 306 nochmals zu erhöhen. Dieser zusätzliche Transformator 309 ist daher gestrichelt eingezeichnet. Die Messstelle 318 kann für diesen Fall zwischen den beiden Transformatoren 308 und 309 angeordnet sein, oder netzseitig zwischen dem zusätzlichen Transformator 309 und dem elektrischen Versorgungsnetz 306.

Vorzugsweise erfolgt die Spannungsmessung mit Hilfe eines Zustandsbeobachters oder Messfilters. Das kann in dem Messblock 316 durchgeführt werden. Vorzugsweise erfolgt die Spannungsmessung so, wie in der Offenlegungsschrift US 8,981,755 B2 zur Spannungsmessung vorgeschlagen wird.

Basierend auf der so erfassten Leistung P und der so erfassten Spannung U, kann in dem Sensitivitätsblock 320 eine Netzsensitivität Sen bestimmt werden. Es ist zu beachten, dass hierbei die Leistung P und die Spannung U möglichst hoch dynamisch erfasst werden und insbesondere werden hier auch Änderungen berücksichtigt. Die Netzsensitivität Sen kann hier als Verhältnis der Spannungsänderung zu einer Änderung der eingespeisten Leistung erfasst werden.

Diese Netzsensitivität Sen wird dann an den Gradientenblock 322 gegeben. Dieser erzeugt zumindest abhängig von dieser eingegebenen Netzsensitivität Sen entsprechende Werte für den positiven Grenzgradienten dPₚ und den negativen Grenzgradienten dPₙ. Die Erzeugung kann beispielsweise abhängig von vorbestimmten Tabellen erfolgen. Es können aber auch weitere Werte berücksichtigt werden. Beispielsweise kann auch eine Abhängigkeit von dem absoluten Spannungswert U vorliegen. Entsprechend wäre die erfasste Spannung U auch dem Gradientenblock 322 zu übergeben, was hier der Einfachheit halber nicht dargestellt ist.

Jedenfalls werden diese beiden erzeugten Gradientenwerte dPₚ und dPₙ in den Begrenzungsblock 312 eingegeben, um die Flanken gegebenenfalls entsprechend zu verändern.

Somit kann hierdurch eine zu starke Schwankung der Leistungseinspeisung vermieden werden. Dabei verträgt ein Netz mit geringer Netzsensitivität eine stärkere bzw. schnellere Leistungsänderung als ein Netz mit einer hohen Netzsensitivität. Dabei ist zu beachten, dass sich diese Netzsensitivität schnell ändern kann und daher auch vorgeschlagen wird, diese zu erfassen und dann die entsprechenden Grenzgradienten anzupassen.

Figur 3 veranschaulicht somit das Prinzip für eine einzelne Windenergieanlage 300. Die veranschaulichten Funktionsblöcke, nämlich insbesondere der Begrenzungsblock 312, der Sensitivitätsblock 320 und der Gradientenblock 322 können auch Teil der Windenergieanlage 300, insbesondere Teil der Steuereinheit 302 sein. Die Darstellung in Figur 3 soll insbesondere der Anschauung dienen.

Außerdem kann die in Figur 3 gezeigte Struktur ganz ähnlich für einen Windpark verwendet werden. Eine mögliche Modifizierung für einen Windpark besteht darin, dass der Begrenzungsblock 312 als Eingangsleistung statt des Leistungssollwertes Pₛ eine Summe aller Leistungssollwerte aller Windenergieanlagen in dem Park erhält. Diese Summenleistung wird dann als Sollwert in den Begrenzungsblock 312 eingegeben und gegebenenfalls modifiziert. Der entsprechend ausgegebene modifizierte Leistungssollwert ist insoweit auch eine Leistungssumme oder ein Summenleistungswert, der dann über einen Distributionsblock gegeben werden kann, wobei der Distributionsblock diese Summenleistung nach einem vorgegebenen Schlüssel und/oder abhängig konkreter Gegebenheiten im Windpark aufteilt. Im einfachsten Fall erfolgt die Aufteilung so, dass jede Windenergieanlage im Park einen gleichen Anteil erhält. Das gilt besonders dann, wenn der Windpark nur identische Windenergieanlagen aufweist, zumindest Windenergieanlagen gleicher Größe und keine der Windenergieanlagen einen Defekt hat. Sofern Windenergieanlagen aber unterschiedlich groß sind und in einem Park zusammengefasst sind, kann ein solcher Verteilungsschlüssel auch anders gewählt werden.

Vorzugsweise hängt die Wahl der Grenzgradienten oder zumindest des einen Grenzgradienten auch oder alternativ noch von einem Kurzschlussstromverhältnis des elektrischen Versorgungsnetzes 306 bezogen auf den Netzanschlusspunkt 310 ab. Außerdem oder alternativ hängt die Wahl des wenigstens einen Grenzgradienten auch von der aktuellen Spannung im Netz, also von dem absoluten Wert der Spannung im Netz ab. So kann beispielsweise bei einer geringen Netzspannung U ähnlich wie bei einer hohen Netzsensitivität vorgegangen werden, indem dann nämlich besonders kleine Grenzgradienten, bezogen auf ihren Betrag, vorgesehen werden. Insoweit kann auch die Netzspannung als Netzzustand und das Kurzschlussstromverhältnis als im Netzeigenschaft angesehen werden.

## Patentansprüche

1. Verfahren zum Einspeisen elektrischer Leistung in ein elektrisches Versorgungsnetz (120, 306) durch wenigstens eine Windenergieanlage (100, 300), wobei
- das Einspeisen so gesteuert wird, dass Änderungen der eingespeisten Leistung (P) begrenzt werden und
- als Begrenzung wenigstens ein Grenzgradient (dPₚ, dPₙ) vorgegeben wird, der den Betrag der maximalen Änderung festlegt, **dadurch gekennzeichnet, dass**
- der wenigstens eine Grenzgradient in Abhängigkeit einer Eigenschaft und/oder eines momentanen Zustandes des Versorgungsnetzes im laufenden Betrieb eingestellt wird.

2. Verfahren nach Anspruch 1, **dadurch gekennzeichnet, dass** der wenigstens eine Grenzgradient (dPₚ, dPₙ) in Abhängigkeit einer Netzsensitivität des Versorgungsnetzes (120, 306) eingestellt wird, wobei die Netzsensitivität ein Verhältnis einer Netzspannungsänderung zu einer Änderung der eingespeisten Wirkleistung definiert ist.

3. Verfahren nach Anspruch 2, **dadurch gekennzeichnet, dass** der Grenzgradient (dPₚ, dPₙ) je kleiner eingestellt, je größer die Netzsensitivität ist.

4. Verfahren nach einem der vorstehenden Ansprüche, **dadurch gekennzeichnet, dass** für die Begrenzung eines Anstiegs der eingespeisten Leistung (P) ein erster Grenzgradient (dPₚ) und für die Begrenzung eines Abfalls der eingespeisten Leistung ein zweiter Grenzgradient (dPₙ) vorgegeben wird, die unterschiedlich sind, insbesondere ist der erste größer als der zweite.

5. Verfahren nach einem der vorstehenden Ansprüche, **dadurch gekennzeichnet, dass** zur Begrenzung eines Abfalls der eingespeisten Leistung (P) elektrische Leistung aus einem Zwischenspeicher, insbesondere elektrischen Zwischenspeicher verwendet wird.

6. Verfahren nach einem der vorstehenden Ansprüche, **dadurch gekennzeichnet, dass** die Windenergieanlage (100, 300) dazu vorbreitet ist, elektrische Leistung aus dem Versorgungsnetz (120, 306) aufzunehmen, und die Änderung der entnommenen Leistung über wenigstens einen oder den wenigstens einen Grenzgradienten (dPₚ, dPₙ) begrenzt wird.

7. Verfahren nach einem der vorstehenden Ansprüche, **dadurch gekennzeichnet, dass** der wenigstens eine Grenzgradient (dPₚ, dPₙ) außerdem in Abhängigkeit wenigstens einer Eigenschaft bzw. eines Zustandes der Liste eingestellt wird umfassend:
- ein auf einen Netzanschlusspunkt (118, 310) bezogenes Kurzschlussstromverhältnis,
- eine Netzspannung des elektrischen Versorgungsnetzes und
- eine Netzfrequenz.

8. Verfahren nach einem der vorstehenden Ansprüche, **dadurch gekennzeichnet, dass** der wenigstens ein Grenzgradient (dPₚ, dPₙ) in Abhängigkeit einer Eigenschaft und/oder eines momentanen Zustandes des Versorgungsnetzes angepasst wird.

9. Verfahren nach einem der vorstehenden Ansprüche, **dadurch gekennzeichnet, dass** der wenigstens eine Grenzgradient (dPₚ, dPₙ) in Abhängigkeit einer Eigenschaft und/oder eines momentanen Zustandes des Versorgungsnetzes verändert wird.

10. Windenergieanlage (100, 300) zum Einspeisen elektrischer Leistung in ein elektrisches Versorgungsnetz, wobei ein Verfahren gemäß einem der vorstehenden Ansprüche ausgeführt wird.

11. Windpark (112) mit mehreren Windenergieanlagen (100, 300), wobei zum Einspeisen elektrischer Leistung (P) in ein elektrisches Versorgungsnetz (120, 306) ein Verfahren nach einem der Ansprüche 1 bis 9 verwendet wird und/oder ein, mehrere oder alle Windenergieanlagen gemäß Anspruch 10 ausgebildet sind.

## Claims

1. A method for supplying electrical power to an electrical supply grid (120, 306) from at least one wind power installation (100, 300), wherein
- the supply is controlled such that changes in the supplied power (P) are limited, and
- the limiting prescribed is at least one limit gradient (dPₚ, dPₙ) that stipulates the magnitude of the maximum change, **characterized in that**
- the at least one limit gradient is set on the basis of a property and/or an instantaneous state of the supply grid during ongoing operation.

2. The method as claimed in claim 1, **characterized in that** the at least one limit gradient (dPₚ, dPₙ) is set on the basis of a grid sensitivity of the supply grid (120, 306), wherein the grid sensitivity is defined a ratio of a grid voltage change to a change in the supplied active power.

3. The method as claimed in claim 2, **characterized in that** the limit gradient (dPₚ, dPₙ) is set lower the higher the grid sensitivity is.

4. The method as claimed in one of the preceding claims, **characterized in that** a first limit gradient (dPₚ) is prescribed for limiting a rise in the supplied power (P) and a second limit gradient (dPₙ) is prescribed for limiting a fall in the supplied power, said limit gradients being different, in particular the first being higher than the second.

5. The method as claimed in one of the preceding claims, **characterized in that** a fall in the supplied power (P) is limited by virtue of electrical power from a buffer store, in particular an electrical buffer store, being used.

6. The method as claimed in one of the preceding claims, **characterized in that** the wind power installation (100, 300) is prepared to accept electrical power from the supply grid (120, 306), and the change in the drawn power is limited by means of at least one or the at least one limit gradient (dPₚ, dPₙ) .

7. The method as claimed in one of the preceding claims, **characterized in that** the at least one limit gradient (dPₚ, dPₙ) is moreover set on the basis of at least one property or one state of the list comprising:
- a short-circuit current ratio referenced to a grid connection point (118, 310),
- a grid voltage of the electrical supply grid and
- a grid frequency.

8. The method as claimed in one of the preceding claims, **characterized in that** the at least one limit gradient (dPₚ, dPₙ) is adapted on the basis of a property and/or an instantaneous state of the supply grid.

9. The method as claimed in one of the preceding claims, **characterized in that** the at least one limit gradient (dPₚ, dPₙ) is altered on the basis of a property and/or an instantaneous state of the supply grid.

10. A wind power installation (100, 300) for supplying electrical power to an electrical supply grid, wherein a method as claimed in one of the preceding claims is carried out.

11. A wind farm (112) having multiple wind power installations (100, 300), wherein electrical power (P) is supplied to an electrical supply grid (120, 306) by virtue of a method as claimed in one of claims 1 to 9 being used and/or one, multiple or all wind power installations being configured as claimed in claim 10.

## Revendications

1. Procédé d'injection de puissance électrique dans un réseau d'alimentation électrique (120, 306) par au moins une éolienne (100, 300), dans lequel
- l'injection est commandée de telle sorte que des modifications de la puissance (P) injectée sont limitées, et
- au moins un gradient limite (dPₚ, dPₙ) est spécifié en tant que limitation, lequel fixe la valeur de la modification maximale, **caractérisé en ce que**
- l'au moins un gradient limite est réglé, en cours de fonctionnement, en fonction d'une propriété et/ou d'un état instantané du réseau d'alimentation.

2. Procédé selon la revendication 1, **caractérisé en ce que** l'au moins un gradient limite (dPₚ, dPₙ) est réglé en fonction d'une sensibilité de réseau du réseau d'alimentation (120, 306), dans lequel la sensibilité de réseau est définie un rapport entre une modification de tension de secteur et une modification de la puissance active injectée.

3. Procédé selon la revendication 2, **caractérisé en ce que** plus le réglage du gradient limite (dPₚ, dPₙ) est petit, plus la sensibilité de réseau est grande.

4. Procédé selon l'une quelconque des revendications précédentes, **caractérisé en ce que** sont spécifiés un premier gradient limite (dPₚ) pour la limitation d'une hausse de la puissance (P) injectée et un deuxième gradient limite (dPₙ) pour la limitation d'une baisse de la puissance injectée, lesquels sont différents, en particulier le premier est plus grand que le deuxième.

5. Procédé selon l'une quelconque des revendications précédentes, **caractérisé en ce qu'**une puissance électrique issue d'un accumulateur intermédiaire, en particulier d'un accumulateur intermédiaire électrique, est utilisée pour limiter une baisse de la puissance (P) injectée.

6. Procédé selon l'une quelconque des revendications précédentes, **caractérisé en ce que** l'éolienne (100, 300) est préparée pour recevoir une puissance électrique issue du réseau d'alimentation (120, 306), et la modification de la puissance prélevée est limitée par l'intermédiaire d'au moins un ou de l'au moins un gradient limite (dPₚ, dPₙ) .

7. Procédé selon l'une quelconque des revendications précédentes, **caractérisé en ce que** l'au moins un gradient limite (dPₚ, dPₙ) est réglé par ailleurs en fonction d'au moins une propriété ou d'un état de la liste de manière à comprendre :
- un rapport de courant de court-circuit se rapportant à un point de branchement au réseau (118, 310),
- une tension de réseau du réseau d'alimentation électrique, et
- une fréquence de réseau.

8. Procédé selon l'une quelconque des revendications précédentes, **caractérisé en ce que** l'au moins un gradient limite (dPₚ, dPₙ) est adapté en fonction d'une propriété et/ou d'un état instantané du réseau d'alimentation.

9. Procédé selon l'une quelconque des revendications précédentes, **caractérisé en ce que** l'au moins un gradient limite (dPₚ, dPₙ) est modifié en fonction d'une propriété et/ou d'un état instantané du réseau d'alimentation.

10. Eolienne (100, 300) servant à injecter une puissance électrique dans un réseau d'alimentation électrique, dans laquelle un procédé selon l'une quelconque des revendications précédentes est exécuté.

11. Parc éolien (112) avec plusieurs éoliennes (100, 300), dans lequel un procédé selon l'une quelconque des revendications 1 à 9 est utilisé pour injecter une puissance (P) électrique dans un réseau d'alimentation (120, 306) électrique et/ou une, plusieurs ou toutes les éoliennes sont réalisées selon la revendication 10.
